**Europäisches Patentamt**

**European Patent Office**

**Office européen des brevets**

(11) Numéro de publication : **0 560 709 A2**

# (12) DEMANDE DE BREVET EUROPEEN

(21) Numéro de dépôt : **93810098.9**

(22) Date de dépôt : **18.02.93**

(51) Int. Cl.$^5$ : **F01C 1/10**

(30) Priorité : **05.03.92 CH 705/92**

(43) Date de publication de la demande :
**15.09.93 Bulletin 93/37**

(84) Etats contractants désignés :
**AT BE CH DE ES FR GB IE IT LI NL SE**

(71) Demandeur : **Linder, René**
**Piazza Baraini**
**CH-6852 Genestrerio (CH)**

(72) Inventeur : **Linder, René**
**Piazza Baraini**
**CH-6852 Genestrerio (CH)**

(74) Mandataire : **AMMANN PATENTANWAELTE**
**AG BERN**
**Schwarztorstrasse 31**
**CH-3001 Bern (CH)**

(54) **Machine à piston rotatif et utilisation de celle-ci.**

(57)    Le piston rotatif (6) avec l'axe de rotation C effectue une rotation relative dans un cylindre annulaire (1) avec l'axe de rotation (O) décalé par rapport à l'axe du piston (C) par l'excentricité (e). Le cylindre (1) présente trois chambres (2) à surface cylindrique (3) dans lesquelles les deux extrémités à surface cylindrique (7) du piston (6) peuvent s'engager lors du mouvement relatif entre le piston et le cylindre. La surface du piston (6) s'appuie continuellement sur trois rouleaux (5) du cylindre (1). La position relative respectivement le mouvement relatif entre le piston (6) et le cylindre (1), est rigidement déterminé par l'appui du piston sur les rouleaux (5) et l'excentricité (e) entre les axes du piston et du cylindre. La machine peut être utilisée comme moteur à combustion, pompe volumétrique, ou moteur hydraulique. Les mouvements rotatifs du piston et du cylindre sont bien équilibrés sans balourd, et la machine peut tourner à des hautes vitesses sans vibrations et sans bruit. Comme moteur à combustion elle permet un rendement élevé, une pollution minimale et une puissance spécifique élevée.

FIG. 1

La présente invention concerne une machine à piston rotatif, machine qui peut être réalisée sous forme de compresseur ou pompe, de moteur hydraulique ou pneumatique, de moteur à combustion ou toute combinaison de telles machines. Le but de l'invention est de réaliser une machine à piston rotatif parfaitement équilibrée et ainsi susceptible de tourner à des très hautes vitesses et de réduire la consommation de carburant, la pollution et le bruit. Les revendications 1 à 3 définissent des solutions du problème posé. Ces solutions peuvent être réalisées séparément ou de préférence en combinaison.

L'invention sera expliquée plus en détail ci-dessous à l'aide des dessins dans lequels

La figure 1 représente le principe de construction de la machine selon l'invention,

La figure 2 représente une partie du cycle d'opération d'un moteur à combustion selon l'invention,

La figure 3 est une première coupe axiale du moteur à combustion selon l'invention,

La figure 4 est une deuxième coupe axiale du moteur à combustion selon l'invention,

Les figures 5 et 6 représentent une coupe axiale respectivement radiale d'une pompe ou d'un compresseur selon l'invention,

Les figures 7 et 8 sont des coupes radiales d'un moteur hydraulique ou pneumatique selon l'invention dans deux positions typiques du cycle d'opération,

La figure 9 montre un système d'usinage du piston rotatif de la machine,

La figure 10 montre schématiquement une utilisation de trois machines selon l'invention, et

Les figures 11 et 12 montrent une coupe radiale respectivement une coupe axiale d'un compresseur selon l'invention.

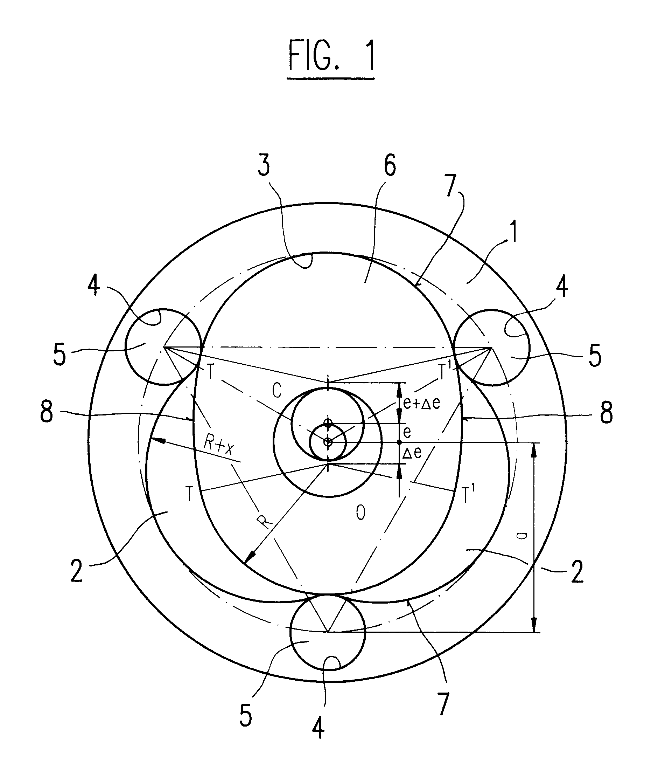

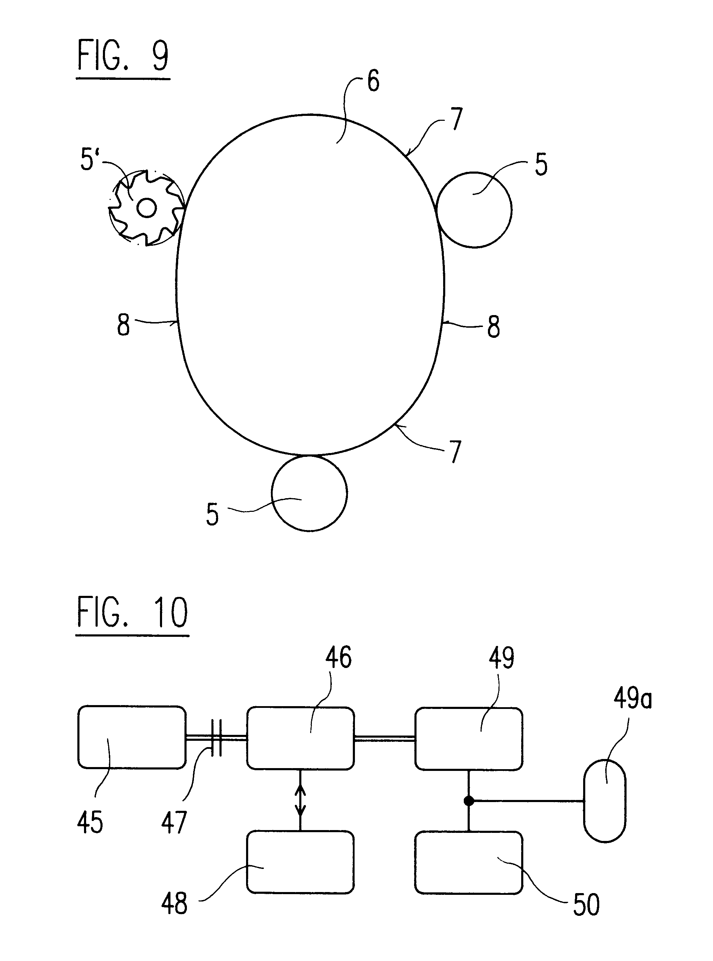

La figure 1 représente les éléments et la géométrie fondamentale des parties actives d'une machine selon l'invention. Cette machine comporte un cylindre annulaire 1 qui présente des cavités ou chambres 2 à l'intérieur. Les trois chambres 2 sont décalées de 120°. Les surfaces 3 qui délimitent les chambres 2 sont des surfaces cylindriques avec un rayon R + x. Le cylindre 1 présente trois alésages 4 qui reçoivent des rouleaux d'appui et d'étanchéité 5. Ces rouleaux 5 sont montés rotativement d'une manière expliquée ci-dessous et ils sont disposés symétriquement entre chaque paire de chambres 2 adjacentes. Le piston rotatif 6 de la machine est de forme oblongue avec deux surfaces cylindriques 7 symétriquement opposées et décalées de 180°. Ces surfaces cylindriques 7 sont reliées par des surfaces 8 dont la forme exacte est déterminée expérimentalement respectivement par un processus de fabrication spécifique. Dans ce processus les surfaces cylindriques 7 sont d'abord usinées. Ces surfaces 7 sont ensuite appuyées sur deux rouleaux 5 et déplacées sur ces rouleaux, tandis que l'une après l'autre des surfaces 8 est usinée par un outil en position du troisième rouleau. La figure 9 représente schématiquement ce processus. Le piston 6 est appuyé avec ses surfaces cylindriques 7 déjà usinées sur deux rouleaux d'appui 5. Le troisième rouleau d'appui est remplacé par un fraiseur cylindrique 5'. Quand le piston 6 est tourné sur les deux rouleaux 5 dans le sens horaire, le fraiseur 5' usine la surface 8 gauche. Le piston 6 est ensuite retourné pour usiner la surface 8 droite par le même processus. Le piston ainsi obtenu peut être utilisé comme chablon pour la fabrication en série de pistons identiques sur un appareil à rectifier par copiage.

Tandis que l'axe du cylindre coïncide avec l'axe central O de la machine, le piston 6 est monté rotativement autour d'un centre ou d'un axe C décalé par rapport à l'axe O d'une excentricité e. La liste suivante donne les significations de certaines valeurs des désignations contenues dans la figure 1.

$O$ = centre de la machine
$C$ = centre du rotor
$e$ = entre-axe séparant les deux centres
$\Delta e$ = $\dfrac{e}{\cos 30°}$ mesure importante, déterminant la longueur des surfaces 7
$a$ = $5e + 3e \cdot \sqrt{3}$ centres des rouleaux-segments d'appui
$s$ = rayon des rouleaux-segments
$R$ = $a - (s + \Delta e)$ rayon des surfaces 7 du rotor
$T\text{-}T$ et $T^1 - T^1$ = courbe à déterminer et qui doit prévoir le contact continu entre le rotor et les rouleaux. La largeur du rotor est égale à sa longueur moins 4e
$x$ = tolérance nécessaire au type de machine en construction, c'est-à-dire entre l'extrémité arrondie du rotor et la chambre qu'il occupe au sommet de sa course.

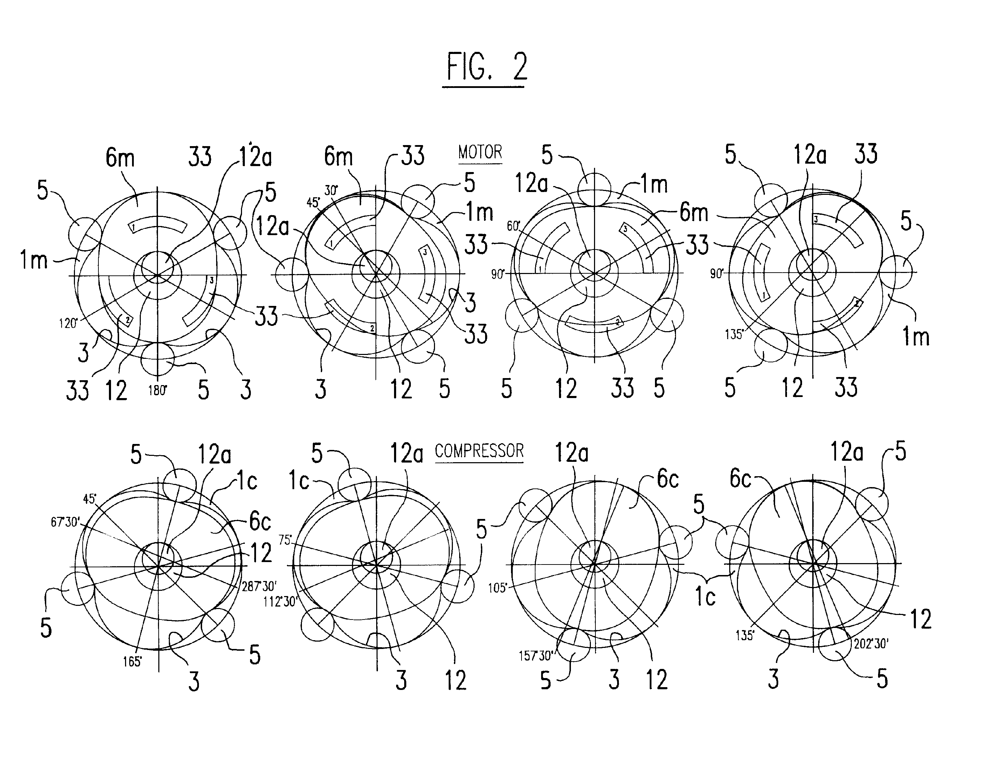

Comme mentionné ci-dessus le système selon la figure 1 est conçu de façon que lors d'une rotation du cylindre 1 la position relative entre ce cylindre et le piston 6 est continuellement déterminée sans équivoque par le contact continu de la surface du piston 6 sur les trois rouleaux d'appui 5 et l'excentricité de l'axe du piston. Cette situation est représentée dans la figure 2 qui sera expliquée plus tard mais qui montre clairement le mouvement relatif forcé entre le cylindre et le piston.

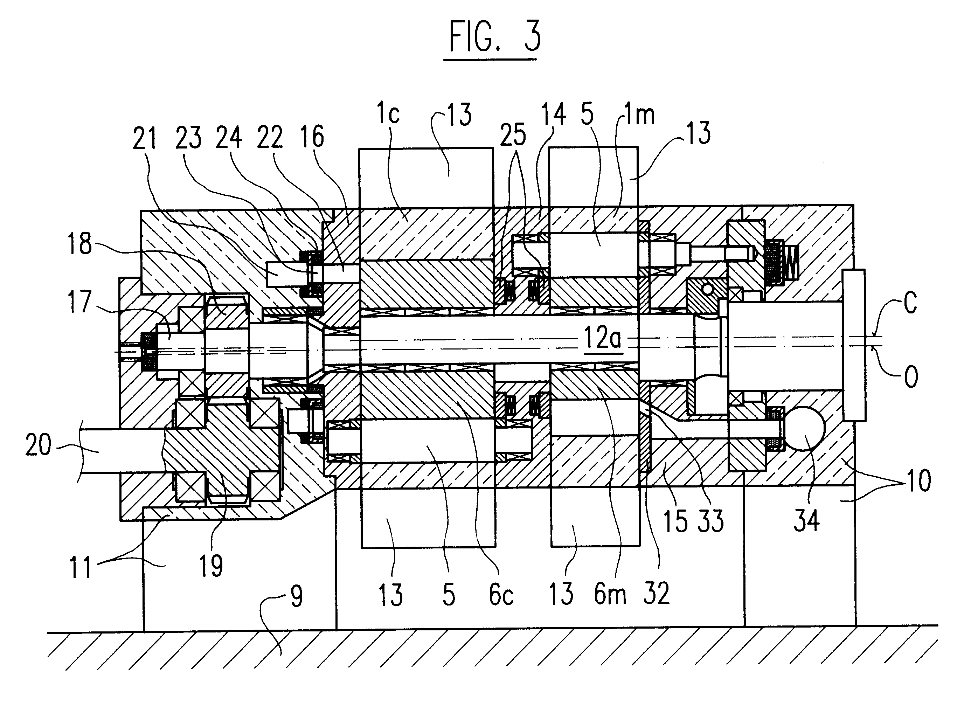

La figure 3 montre un exemple d'exécution d'un moteur à combustion selon l'invention. Ce moteur présente une base 9 sur laquelle sont montés des supports 10 et 11, l'arbre principal et central 12 étant fixé dans le support 10. Cela veut dire que cet arbre principal est immobile et il porte les parties rotatives du moteur. L'arbre 12 présente une partie excentrique 12a avec l'excentricité e par rapport à l'axe centrale O du moteur. Le moteur présente une partie moteur avec un cylindre-moteur Im et un cylindre-compresseur 1c. Dans l'exemple le cylindre-compresseur est de 50 % plus large dans la direction axiale que le cylindre-moteur. Le piston-moteur 6m et le piston-compresseur 6c sont montés rotativement à l'aide de cages à aiguilles sur la partie excentrique 12a de l'arbre 12. Les cylindres 1c et Im peuvent être en aluminium et présenter des ailettes de refroidissement 13. La figure 3 représente également l'un des rouleaux d'appui et d'étanchéité 5m respectivement 5c monté rotativement dans des flasques, à savoir un flasque médian 14 disposé entre le moteur et le compresseur, un flasque d'échappement 15 et un flasque moteur 16. Ces flasques 14, 15 et 16 sont fixés aux cylindres 1c et 1m, et les flasques 15 et 16 sont montés rotativement sur des parties non-excentriques de l'arbre 12 à l'aide de cages à aiguilles. Tous les flasques 14, 15 et 16 avec les cylindres 1c et 1m sont donc montés rotativement autour de l'axe O. La partie compresseur et la partie moteur correspondent donc au principe expliqué à l'aide de la figure 1. Le flasque 16 se prolonge axialement par un arbre 17 qui porte un pignon 18, ce pignon étant en prise avec un pignon 19 qui est fixé sur l'arbre 20 du moteur. Les pignons 18 et 19 peuvent être choisis selon le rapport de vitesse désiré entre le moteur et l'arbre 20.

Le support 11 présente un canal d'admission d'air 21, et le flasque 16 présente des fraisures 22 qui permettent l'aspiration d'air dans le compresseur. Cette admission d'air est commandée par des passages 23 dans un flasque de distribution en céramique 24. L'ouverture et la fermeture du passage d'air dans le compresseur sont automatiquement commandées par ce flasque de distribution 24 sans soupapes quelconques.

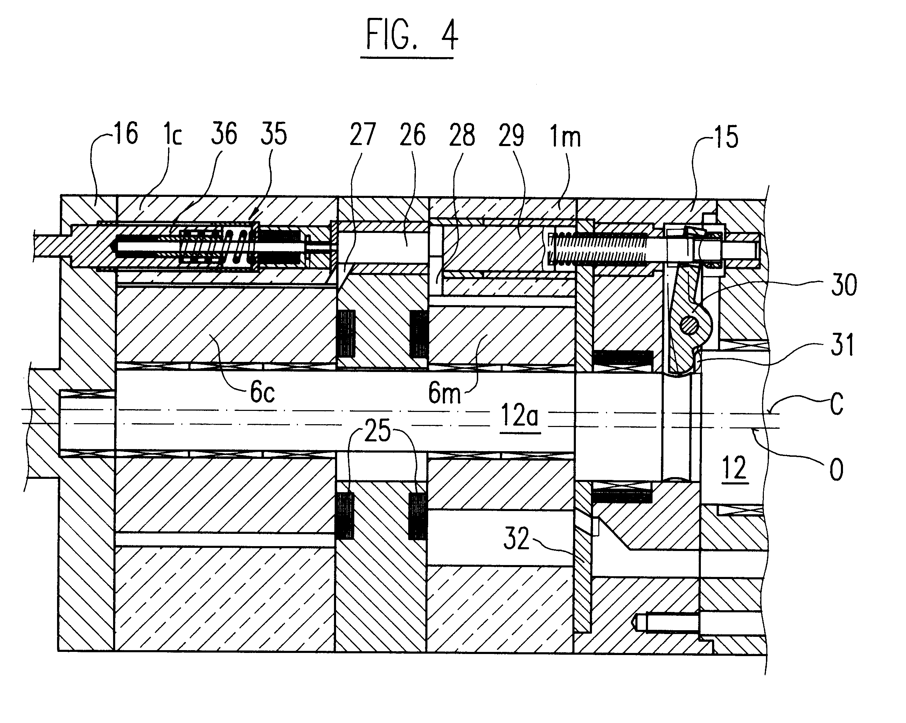

Le flasque médian comprend des segments latéraux d'étanchéité 25 pressés contre les faces des pistons 6c et 6m. Selon la figure 4, dans laquelle les éléments du moteur sont désignés par les mêmes chiffres que dans la figure 3, on voit que des passages d'air 26 sont prévus entre la partie compresseur et la partie moteur. Ces passages 26 communiquent avec le compresseur par des fentes inclinées 27 et avec le moteur par des fentes 28. Des pistons 29 agissent comme soupapes pour ouvrir et fermer le passage entre le compresseur et le moteur, et ces pistons de soupape 29 sont commandés par des leviers 30 qui sont commandés par une surface à came 31 de l'arbre 12 respectivement une came annulaire montée sur cet arbre. Le flasque 15 comporte un flasque 32 de contrôle pour l'échappement. Ce flasque 32 présente des fentes 33 qui sont ouvertes et fermées automatiquement par le mouvement relatif du piston 6m pour permettre l'échappement des gaz brûlés dans un canal d'échappement 34 ainsi que le lavage du moteur avec de l'air avant la compression.

Cette commande automatique des fentes d'échappement 33 par le piston 6m est représentée sur la figure 2 pour un cycle d'expansion dans une chambre du cylindre et le cycle d'échappement et de lavage jusqu'au début de la compression dans la chambre voisine du cylindre ainsi que la phase de compression dans la troisième chambre du cylindre. La figure 2 montre en bas les positions et les cycles correspondants du compresseur. On voit que les éléments du compresseur sont décalés par rapport aux éléments du moteur d'environ 45°.

Selon la figure 4 des injecteurs d'essence 35 sont prévus dans le cylindre-compresseur 1c. La buse d'injection de chacun de ces injecteurs est située devant le passage d'air 26, et le piston d'injection 36 de chaque injecteur 35 est commandé par une came (non représentée) dans le support 11. Trois bougies d'allumage (non représentées) sont prévues à des endroits appropriés du cylindre-moteur.

Le tableau qui suit donne les détails d'un cycle respectivement d'un tour entier des cylindres compresseur et moteur.

## Cycle du moteur rotatif et volumétrique

**Important:** le cylindre compresseur précède le cylindre moteur de 45°.

Positions des cylindres de 15° en 15° + quantité d'air aspiré ou compressé dans les chambres en % + explications du cycle.

| Cylindre compresseur | Aspiration en %. | Cylindre moteur. | Compression en %. | Echappement | Explosion | Cycle. |
|---|---|---|---|---|---|---|
| 0° | début | 315° | 91% | | | compression |
| 15° | 1% | 330° | 96% | | | compression |
| 30° | 4% | 345° | 98-99% | | | compression |
| 45° | 9% | 360° | 100% | | Allumage | fin de compression |
| 60° | 18% | 15° | détente des gaz | | ******* | et fin du cycle |
| 75° | 28% | 30° | " | | ******* | |
| 90° | 42% | 45° | " | | ******* | |
| 105° | 56% | 60° | " | | ******* | |
| 120° | 69% | 75° | " | | ******* | |
| 135° | 81% | 90° | " | | ******* | |
| 150° | 91% | 105° | " | | ******* | |
| 165° | 97% | 120° | " | début | ******* | fin détente des gaz |
| 180° | 100% | 135° | | ******* | | échappement |
| 195° | compression | 150° | | ******* | | échappement |
| 210° | 9% | 165° | | ******* | | échappement |
| 225° | 18% | 180° | début arrivée air | ******* | | échappement forcé |
| 240° | 31% | 195° | lavage chambre | ******* | | échappement forcé |
| 255° | 44% | 210° | lavage chambre | ******* | | échappement forcé |
| 270° | 58% | 225° | lavage chambre | ******* | injection | échappement forcé |
| 285° | 71% | 240° | début compression | | injection | fin d'échappement |
| 300° | 82% | 255° | compression + air | | injection | compression |
| 315° | 91% | 270° | compression + air | | fin injection | compression |
| 330° | 96% | 285° | compression + air | | | compression |
| 345° | 99% | 300° | compression + air | | | compression |
| 360° | 100% | 315° | fin arrivée air | | | compression |

### Caractéristiques du moteur rotatif

1./ Moteur rotatif composé de 2 cylindres tournant sur 1 axe et de 2 rotors tournant sur un deuxième axe séparés par un entre-axes 'e'.

2./ Le premier cylindre est le compresseur et est 50% plus large que le cylindre-moteur qui est disposé 45° en retrait du compresseur.

3./ Cette disposition permet d'avoir de l'air déjà comprimé pour laver les chambres du moteur en fin de détente des gaz, et ceci jusqu'à la fermeture de l'échappement et avant l'injection.

EP 0 560 709 A2

La conception du moteur décrit respectivement de la machine selon cette invention se distingue fondamentalement des machines connues par le fait qu'un cylindre annulaire est entraîné en rotation avec un piston rotatif intérieur, la position relative du cylindre et du piston étant à tout instant rigidement déterminée par le contact continu du piston avec des rouleaux d'appui et d'étanchéité du cylindre et par l'excentricité des axes du cylindre et du piston. Le couple d'entraînement du moteur est obtenu grâce à l'excentricité entre les axes du cylindre et du piston. Il va de soi que le moteur représenté comporte une protection non représenté fixé à la base 9 et entourant les parties rotatives du moteur.

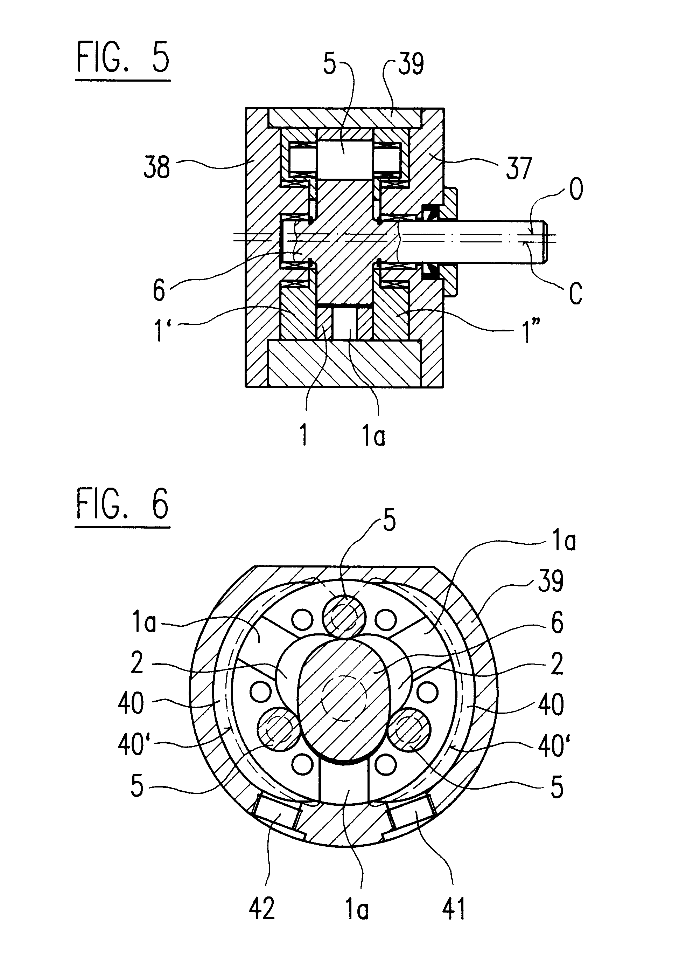

Les figures 5 et 6 montrent une pompe volumétrique selon l'invention. Les mêmes désignations sont utilisées que dans la figure 1. Le cylindre 1 avec ses flasques 1' et 1" est monté dans un carter de pompe présentant des flasques 37 et 38 reliés par un manteau 39. L'axe O du cylindre 1 est décalé par l'excentricité e par rapport à l'axe de rotation C du piston rotatif 6 qui est fixé sur son arbre. Chaque chambre 2 du cylindre communique avec un canal radial 1a. Le cylindre 1 est entouré de deux chambres 40 dans le carter de la pompe, et ces chambres communiquent avec une conduite d'aspiration 41 et de pression 42. Pour compenser la pression radiale du fluide compressé dans l'une des chambres 40 sur la partie rotative de la pompe, des canaux de compensation 40' d'une surface égale à celle d'une chambre 40 sont prévus. Le canal opposé à la chambre 40 sous pression est relié à cette chambre pour compenser la pression radiale produite par la chambre 40 sous pression.

Suivant le sens de rotation de l'arbre d'entraînement respectivement du piston rotatif 6 le fluide est aspiré par l'une des conduites 41 ou 42 et sort par l'autre conduite. Cette fois c'est le piston 6 entraîné qui entraîne le cylindre 1 dans un mouvement rigidement déterminé par le contact continu de la surface du piston avec les rouleaux d'appui 5 et par l'excentricité de l'axe du piston par rapport à l'axe du cylindre.

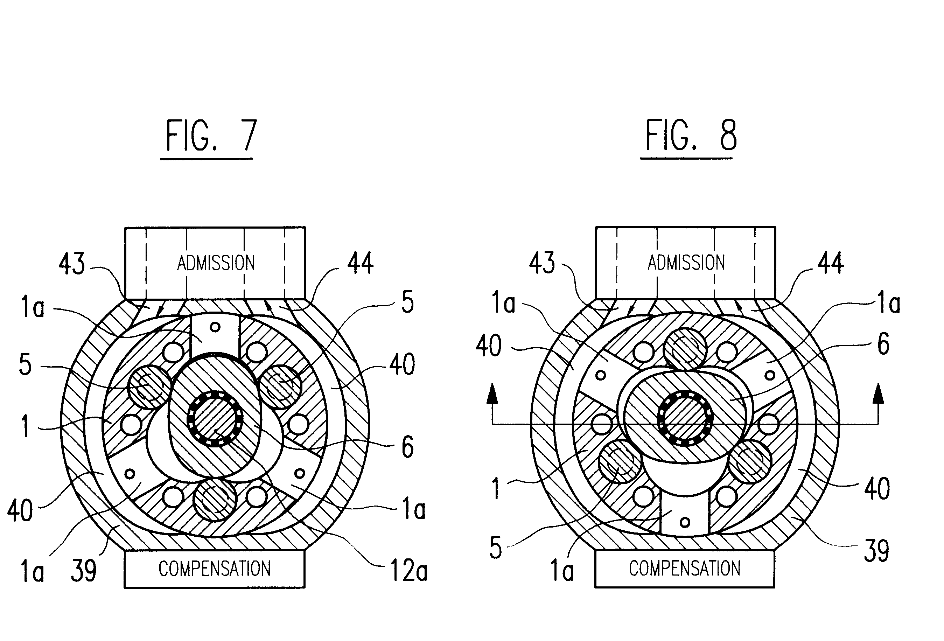

Le moteur hydraulique selon les figures 7 et 8 est pratiquement de construction équivalente à celle de la pompe selon les figures 5 et 6. Par conséquent des éléments correspondants portent les mêmes signes de référence dans les figures 5 à 8. Le fluide sous pression est amené par une conduite 43 et il quitte le moteur par une conduite de retour 44. Le moteur se distingue particulièrement de la pompe par le fait que le piston rotatif 6 est monté rotativement sur un arbre excentrique 12a, tandis que l'arbre d'entraînement du moteur est relié au cylindre 1.

Aussi bien dans la pompe selon les figures 5 et 6 que particulièrement dans le moteur selon les figures 7 et 8 il est indiqué de compenser la force plus élevée agissant sur le cylindre du côté pression par une contre-pression équivalente.

Pour éviter une pulsation trop élevée de la consommation de fluide sous pression par le moteur ou le débit de fluide sous pression par la pompe, on peut prévoir deux ou plusieurs moteurs ou pompes en parallèle avec des cycles d'opération déphasés.

De préférence, le moteur à combustion, la pompe hydraulique et le moteur hydraulique décrits ci-devant peuvent être utilisés en combinaison pour une traction hydraulique ou hydroélectrique d'un véhicule.

Trois composants sont nécessaires pour résoudre ce problème, qui sont:

1./ un moteur rotatif comme celui exposé ci-devant.

2./ la traction hydraulique du véhicule.

3./ un moteur-dynamo d'une certaine force, solution déjà utilisée par certains constructeurs.

La figure 10 montre schématiquement les éléments d'une telle traction. Le moteur à combustion 45 entraîne un générateur/moteur électrique 46 par un accouplement débrayable 47. Le générateur 46 est branché à une batterie 48 et relié à une pompe 49 avec réservoir de pression 49a qui est susceptible d'alimenter un moteur hydraulique 50 d'entraînement des reoues du véhicules. Bien entendu la figure 10 ne montre pas les circuits électriques et hydrauliques nécessaires pour la commande du système.

A la campagne on pourrait utiliser le moteur à combustion et la traction hydraulique exposés ci-dessus. Durant ce laps de temps, le moteur-dynamo chargera les batteries nécessaires par la suite. Vu la taille de ce dynamo-moteur, de la force fournie sera utilisée mais non perdue.

En ville, la pompe nécessaire pour alimenter les moteurs hydrauliques sera désaccouplée du moteur à combustion et sera entraînée par le dynamo-moteur et les batteries. Ceci n'est pas compliqué et réalisable, vu que dans les agglomérations la vitesse des véhicules est limitée et demande moins de force motrice. Il y a aussi beaucoup d'arrêts de circulation où le moteur-dynamo ne fonctionnera pas, donc il y aura économie d'électricité, chose importante pour la capacité des batteries, qui devraient assurer une autonomie de déplacement du véhicule de 25-30 kilomètres dans les agglomérations.

Dans des variantes du système selon la figure 10 on peut prévoir quatre moteurs hydrauliques au lieu d'un seul moteur, ou deux double différentiels alimentés depuis la pompe 49 respectivement l'accumulateur de pression 49a. Un radiateur pour refroidir l'huile peut être prévu dans le circuit hydraulique.

Pour les changements de vitess on peut prévoir deux moteurs hydrauliques de capacité plus grande et deux moteurs hydrauliques de capacité plus faible. Pour le départ et la première vitesse on roulera avec les quatre moteurs hydrauliques. Pour la deuxième vitess on peut entraîner avec les deux moteurs de capacité plus grande, et pour la troisième vitess on roulera avec les deux moteurs de capacité plus faible. Ainsi le flux variera très peu ce qui ne demande que peu de freinage ou d'accélération du moteur à combustion. Les moteurs hydrauliques peuvent être placés dans les roues du véhicule.

Les avantages donnés par cette traction nouvelle ne doivent pas être sous-estimés et sont très importants pour l'avenir. La pollution atmosphérique dans les villes est néfaste pour la population et cette solution pour les véhicules amoindrira cette pollution d'un pourcentage important. Il en sera de même pour la pollution sonore par la circulation, le bruit étant quasi éliminé.

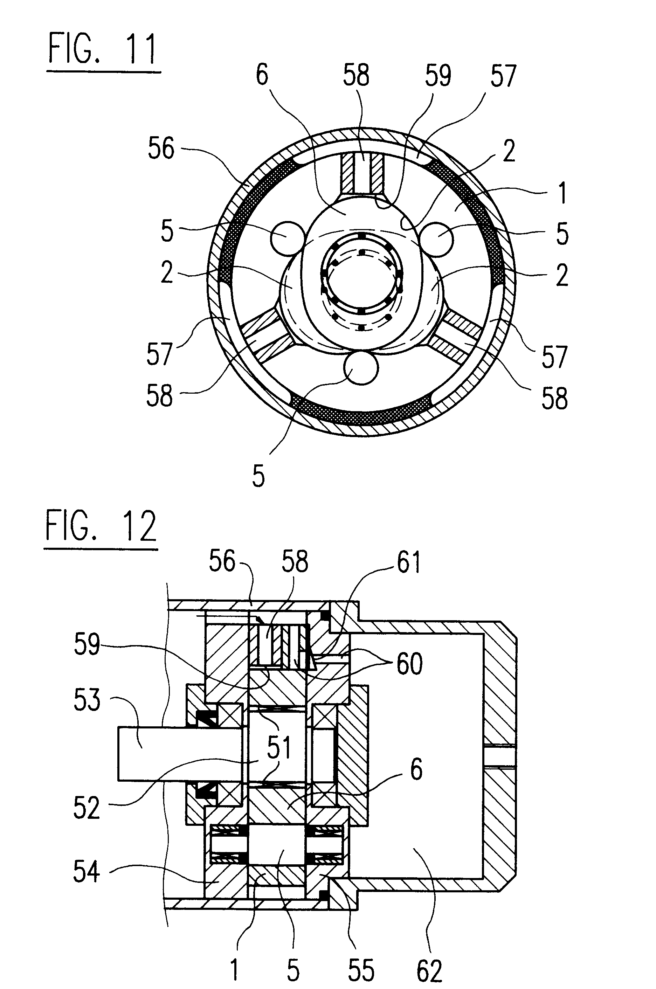

Dans les figures 11 et 12 qui représentent un compresseur, par example pour un réfrigérateur, les éléments correspondants portent les mêmes chiffres de référence que dans les figures précédantes. Le piston 6 est monté rotatif par un roulement à aiguilles 51 sur une partie excentrique 52 de l'arbre de commande 53. Cet arbre 53 et les rouleaux d'appui 5 tournent sur des paliers montés dans des flasques 54 et 55 qui sont montées dans un carter 56. Le gaz à comprimer est admis dans les chambres 2 du cylindre 1 par des canaux d'admission 57 et 58. Des clapets antiretour 59 à l'intérieur des canaux 58 permettent l'admission du gaz dans les chambres 2 mais bloquent son retour. Des canaux d'échappement 60, également munis chacun d'un clapet antiretour 61, permettent la sortie du gaz comprimé des chambres 2 dans un réservoir de pression 62.

Par la rotation de l'arbre 53 le piston 6 est déplacé dans un mouvement forcé et déterminé à chaque instant par l'appui en trois points sur les rouleaux 5 et la position de l'excentrique 52 comme décrit ci-devant. Le gaz est alternativement aspiré dans les chambres 2, compressé dans celles-ci et alimenté dans le réservoir 62.

Le compresseur selon les figures 11 et 12 peut présenter au moins deux pistons 6 et cylindres 1 sur le même arbre et décalés angulairement pour mieux équilibrer la machine.

## Revendications

1.  Machine à piston rotatif déplacable dans un cylindre, caractérisée en ce que le piston (6) est supporté à son extérieur par un appui en trois points (5) et à l'intérieur sur une partie excentrique, la position relative du piston (6) et du cylindre (1) étant continuellement déterminée par la position de la partie excentrique et de l'appui en trois points (5).

2.  Machine à piston rotatif, caractérisée en ce qu'un piston (6) et son cylindre (1) sont les deux rotatifs autour de deux axes décalés l'un par rapport à l'autre.

3.  Machine à piston rotatif, de préférence selon la revendication 1, caractérisée en ce que le pourtour du piston (6) est en contact continu avec des rouleaux (5) d'appui et d'étanchéité montés dans le cylindre (1).

4.  Machine à piston rotatif selon la revendication 1, 2 ou 3, caractérisée en ce que le cylindre (1) comporte des chambres (2) à surface (3) cylindrique et le piston (6) comporte des extrémités à surface (7) cylindrique susceptible de s'engager dans les chambres (2) du cylindre (1), un rouleau d'appui et d'étanchéité (5) étant disposé entre chaque paire de chambres (2) adjacantes du cylindre.

5.  Machine à piston rotatif selon la revendication 4, caractérisée en ce que le cylindre (1) comporte trois chambres (2) décalées de 120°, et le piston (6) présente une forme oblongue avec deux surfaces cylindriques (7) décalées de 180°.

6.  Machine à piston rotatif selon l'une des revendications 1 à 5, caractérisée en ce que le piston (6) est monté rotatif entre des flasques de commande et d'étanchéité (14 16).

7.  Machine à piston rotatif selon l'une des revendications 1 à 6, caractérisée en ce que le piston (6) est rotatif sur un arbre central (0) et fixe, excentrique par rapport à l'axe (C) du cylindre (1), le cylindre étant accouplé à l'arbre (20) de la machine.

8.  Machine à piston rotatif selon l'une des revendications 4 à 7, concue comme moteur à combustion, caractérisée en ce que le cylindre rotatif (1m) d'une partie moteur est accouplé à un cylindre rotatif (1c) similaire d'une partie compresseur qui alimente de l'air à la partie moteur.

9.  Machine à piston rotatif selon la revendication 8, caractérisée par des flasques de contrôle (24,33) présentant des passages de gaz ouverts et fermés par le mouvement relatif entre les pistons (6c,6m) et ces flasques (24,33) pour commander l'admission d'air dans le compresseur et l'évacuation de gaz de la partie moteur vers l'échappement (34).

10. Machine à piston rotatif selon la revendication 8 ou 9, caractérisée par des soupapes (29) commandées par une came entre la partie compresseur et la partie moteur.

11. Machine à piston rotatif selon la revendication 1, 2 ou 3, conçue comme pompe ou moteur hydraulique, caractérisée en ce que le cylindre (1) présente des passages (39) de chaque chambre (2) vers l'éxtérieur où se trouvent diamétralement opposées des chambres (40) d'admission respectivement de sortie du fluide

12. Machine selon l'une des revendications 1 à 3, de préférence compresseurs, caractérisée en ce que le piston (6) est monté rotatif sur une partie excentrique (52) d'un arbre d'entraînement (53) et déplacable dans un cylindre fixe (1) (figures 11 et 12).

13. Utilisation d'un moteur à combustion, d'au moins une pompe et d'au moins un moteur hydraulique selon l'une des revendications précédentes, dans un véhicule, caractérisée en ce que la pompe (49) est entraînée par le moteur à combustion (45) et le ou les moteur(s) hydraulique(s) (50) sont alimenté(s) par ladite pompe.

14. Utilisation selon la revendication 13, caractérisée en ce que la pompe (49) est accouplée sélectivement audit moteur à combustion (45) ou à un générateur-moteur électrique (46) branché à une batterie (48, figure 10).

15. Procédé pour générer les surfaces d'un piston rotatif d'une machine selon la revendication 3, caractérisée en ce que les surfaces cylindriques (7) sont d'abord usinées, après les surfaces cylindriques (7) sont appuyées sur deux rouleaux (5) et déplacées sur ceux - ci tandis que l'une des surfaces de connexion (8) est usinée par: un outil (5') en position du troisième rouleau (5).

# FIG. 1

# FIG. 2

EP 0 560 709 A2

# FIG. 3

# FIG. 4

EP 0 560 709 A2

FIG. 5

FIG. 6

FIG. 7

FIG. 8

43    ADMISSION    44

1a    5

5    40

1    6

40    1a

1a    39    COMPENSATION    12a

43    ADMISSION    1a

1a    6

40

1    40

5    39

1a    COMPENSATION

EP 0 560 709 A2

FIG. 9

FIG. 10

# FIG. 11

# FIG. 12